# EUROPEAN PATENT APPLICATION

(11) **EP 0 609 842 A1**
(43) Date of publication of application: **10.08.1994**
(21) Application number: 94101481.3
(22) Date of filing: 01.02.1994
(51) Int. Cl.: D06F 39/08, F16L 19/00

(54) **Leak prevention device for water supply conduits of electric household appliance**

(30) Priority: 03.02.1993 IT PN930003
(71) Applicant: RE-FLEX S.r.l., 20122 Milano (IT)
(72) Inventor: Restelli, Gino, I-21049 Tradate (IT)
(74) Representative: Grünecker, Kinkeldey, Stockmair & Schwanhäusser Anwaltssozietät

(57) **Abstract**

The device comprises a conduit (7) provided at its ends with connector fittings (11,13) carrying rotatable threaded sleeves (9,10) for connection, respectively, to a water supply tap and an electric household appliance. At least one sleeve (9) has a toothed surface (25) cooperating with a complementary toothed surface of a spring-loaded plunger (26) to permit the threaded sleeve (9) to be rotated only in its tightening direction as long as the plunger (26) is not depressed. The conduit (7) preferably cooperates with an outer sheath (8) to define therebetween a space communicating with a dry sponge body (21) held under compression and adapted in response to the presence of moisture to expand to thereby cause a supply valve (14) to close in the case of rupture of the conduit. A mass (34) of a hygroscopic material communicates with the named space, itself provided with a compensation port (33).

## Description

The present invention relates to an improved leak prevention device for water supply conduits of electric household appliances, particularly for supply conduits of the type provided with an outer safety sheath.

Water supply conduits of the type defined above are well known. They generally comprise an inner conduit enclosed in an outer sheath to define there between a closed space for the retention of water escaping from the conduit in the case of rupture, and are provided with valve means disposed at an upstream location and adapted to interrupt the supply of water in response to such rupture.

Supply conduits of this type are normally adapted to have their opposite ends connected respectively to a water supply tap and to the associated household appliance by means of corresponding connector sleeves. Usually at least the sleeve on the upstream end is provided with screw threads permitting it to be secured to complementary screw threads on the supply tap. There is the well-known danger that this sleeve works itself loose in the course of time, as a result for instance of temperature variations causing the components of the connection to expand and contract to different degrees. This may result in undesirable water leaks, or even in the supply conduit becoming detached from the open supply tap, with a consequent inundation which cannot be prevented by the safety devices provided in the water supply system.

On the other hand, in the preferred case in which the safety valve of the supply conduit is designed to be activated by the expansion of a dry sponge body normally held under compression and communicating with the enclosed space between the supply conduit and the outer sheath, any pressure compensation ports provided in the sheath may permit the ingress of ambient humidity into the enclosed space. In the course of time this humidity may cause the expansion of the sponge body, and thus the inadvertent activation of the safety valve.

On the other hand, if the outer sheath is not provided with at least one compensation port, it is possible in case of rupture of the supply conduit, that the water retained in the enclosed space is prevented from rapidly coming into contact with the sponge body by the presence of air pockets within the enclosed space. This would obviously result in failure of the safety valve to function properly.

An object of the present invention is therefore the provision of a leak prevention device for water supply conduits of electric household appliances, in which any accidental loosening of the terminal connections is substantially prevented.

Another object of the invention is the provision of a leak prevention device of the type indicated above, which presents a higher degree of reliability and at the same time precludes any inadvertent activation of the safety valve means.

According to the invention, these and other objects are attained in a leak prevention device for water supply conduits of electric household appliances incorporating the characteristics set forth in the appended claims.

The characteristics and advantages of the invention will become more clearly evident from the following description, given by way of example with reference to the accompanying drawings, wherein:
- fig. 1: shows a diagrammatic overall view of a leak prevention device according to the invention,
- fig. 2: shows an enlarged sectional view of a first particular of the device of fig. 1 in its normal operating state,
- fig. 3: shows a sectional view taken along the line III-III in fig. 2,
- fig. 4: shows the assembly depicted in fig. 2 in a different operating state,
- fig. 5: shows an enlarged detail of the assembly of fig. 4, and
- fig. 6: shows an enlarged sectional view of another particular of the device depicted in fig. 1.

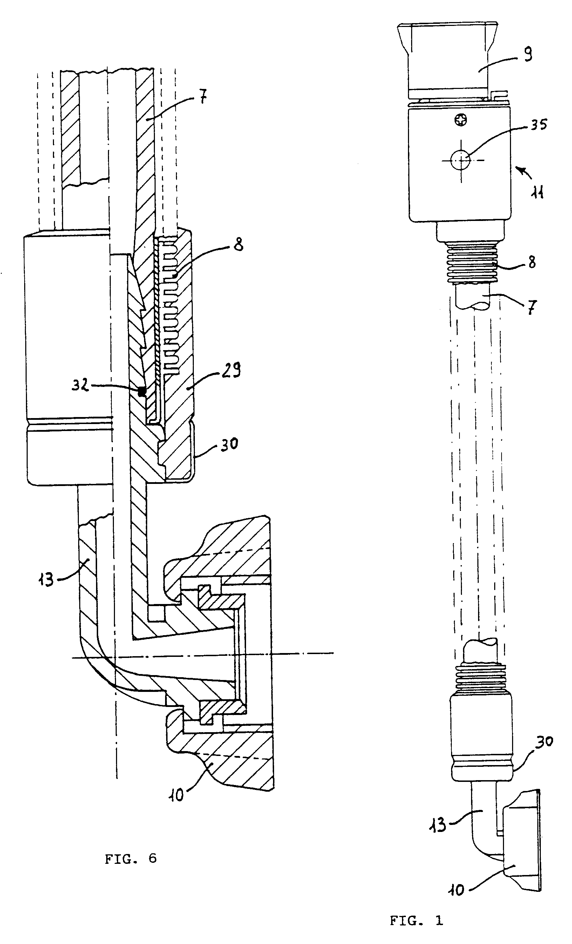

With reference to fig. 1, a water supply conduit 7 substantially enclosed in a bellows-type outer sheath 8 is adapted to have its two ends connected respectively to a water mains tap (not shown) and an electric household appliance (likewise not shown) by means of respective per se known internally threaded coupling sleeves 9 and 10.

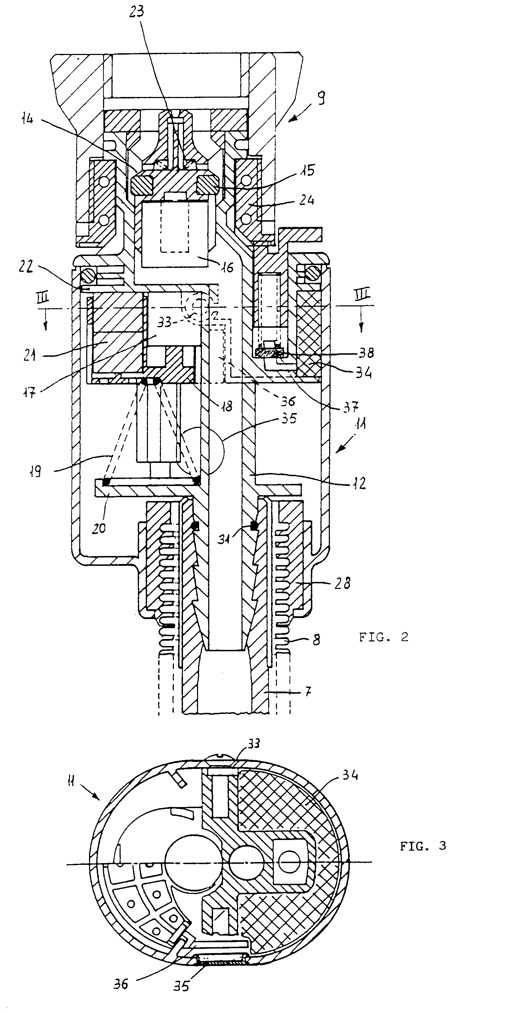

With reference to figs. 2 - 6, coupling sleeve 9 is mounted on an end portion of a connector housing 11 containing a rigid tubular portion 12 received in conduit 7 in a tight fit. Analogously coupling sleeve 10 is mounted on an end portion of a connector piece comprising a rigid tubular portion 13 likewise received in conduit 7 in a tight fit at the opposite end thereof.

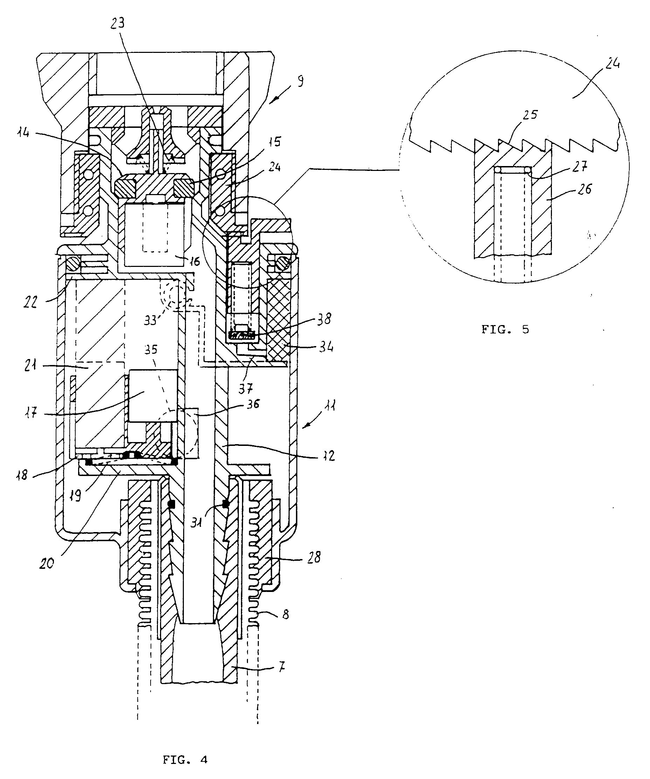

Connector housing 11 accommodates valve means 14 provided with a sealing ring 15 and adapted to move between a normal axial position (fig. 2) in which conduit 7 is in communication with the water mins tap, and an activated axial position (fig. 4) in which tubular portion 12 is obturated. In the preferred embodiment, valve body 14 is fixedly connected to a permanent magnet 16 disposed to face another permanent magnet 17 fixedly attached to a support 18 mounted for axial displacement within connector housing 11 at a location hermetically sealed off from conduit 7 and tubular portion 12, but in communication with the substantially enclosed space defined between conduit 7 and tubular portion 12 on the one hand, and outer sheath 8 on the other. The mutually facing ends of magnets 16 and 17 are of the same polarity; the two magnets are normally maintained close to one another (fig. 2) by a spring 19, preferably of conical shape, kept under axial compression between a flange 20 of tubular portion 12 and support 18. at least one dry sponge body 21 is normally retained under compression between support 18 and an abutment face 22 of connector housing 11. Under the normal operating conditions illustrated in fig. 2, the magnetic repulsion acting between magnets 17 and 16 maintains valve body 14 in the open position against the force of at least one spring 23 biasing the valve towards its clöosed position. As will become more clearly evident in the following, spring 23 permits the device according to the invention to function properly independently of its orientation. In particular, it permits valve 14 to close reliably and rapidly when required, even if the device were mounted upside down for instance in contrast to the upright position shown in the drawings.

With particular reference to figs. 4 and 5, and according to one aspect of the invention, coupling sleeve 9 is non-rotatably connected to a ring 24 provided with a toothed surface 25 normally cooperating with a complementary toothed surface of a spring-loaded plunger 26 which is mounted externally of connector housing 11 and normally maintained in its position of engagement with ring 24 by a spring 27. The engagement faces 25 of ring 24 and plunger 26 are preferably shaped in a saw-tooth configuration so as to permit coupling sleeve 9 to be rotated only in its tightening direction relative to the corresponding screw threads of the water supply tap. This is advantageously effective to prevent the device as a whole from inadvertently working loose on the tap. For rotating sleeve 9 in the opposite direction to disconnect the device from the tap, it is then of course only necessary to depress plunger 26 axially against the force of spring 27.

One end of sheath 8 (figs. 2 and 4) is coupled to the upstream connector assembly in a press fit as per se known. Preferably, however, the respective end of sheath 8 has its outer surface provided with a hull 28 formed thereon of a more resilient material acting to ensure a perfectly watertight connection between sheath 8 and the connector assembly.

The other end of sheath 8 (fig. 6) has its outer surface similarly provided with a hull 29 formed thereon of a more resilient material and cooperating with a clamp ring 30 to ensur4e a perfectly watertight connection between sheath 8 and tubular portion 13.

In addition it is noted that a perfectly watertight connection between supply conduit 7 and tubular portion 12 (figs. 2 and 4) is ensured by the interposition of at least one O-ring 31. In a similar manner, at least one O-ring 32 is interposed between conduit 7 and tubular portion 13 (fig. 6).

In the case of rupture of supply conduit 7, the water escaping therefrom is retained in the enclosed space between conduit 7 and sheath 8 and will eventually come into contact with sponge 21. As a result, the latter expands as shown in fig. 4 to thereby push movable support 18 (including magnet 17) axially away from magnet 16 against the force of spring 19. This causes the magnetic repulsion acting on magnet 16 to disappear, permitting valve member 14 to be displaced to the closed position by the action of spring 23 and the pressure of the mains water supplied through the tap.

The described operation is preferably promoted by the presence of at least one compensation port 33 formed in connector housing 11 at a location relatively close to valve 14 and effective to establish communication between ambient atmosphere and the enclosed space between conduit 7 and sheath 8. On the other hand it is to be noted that pressure variations due for instance to thermal contractions and expansions of the components may result in the ingress of humid ambient air into the connector, and thus into the enclosed space, through port 33. The humidity of the ambient air might cause an undesired expansion of the dry sponge 21, and thus the inadvertent closing of valve 14.

According to another aspect of the invention, this undesired occurrence is avoided by the provision of a mass 34 of a hygroscopic material disposed in the connector preferably at a location relatively remote from sponge 21 and close to compensation port 33. As a result, any humidity contained in the air entering through port 33 will be absorbed by the hygroscopic material 34 and not substantially influence the proper response of sponge 21.

As an alternative or in addition to the hygroscopic material 34, there may be provided non-return valve means associated to the compensation port and acting to permit the passage of air only from the enclosed air to the exterior. In this case port 33 is preferably omitted, its compensating function being taken over by a passage 37 acting to establish communication between the enclosed space and ambient air by way of the gap between the lateral surface of plunger 26 and its guide in which it is slidable in a loose fit. The valve means employed in this case comprise a plug 38 of rubber or the like, which is biased by spring 27 to normally keep passage 37 closed (fig. 2). Whenever a pressure rise occurs within the enclosed space, plug 38 will be raised against the force of spring 27 as shown in fig. 4, to thereby permit air to escape to the outside.

According to a further aspect of the invention, the slidable support 18 is provided with a plurality of (for instance coloured) indicator zones which are visible from the outside of the connector through transparent windows 35, preferably when the device is in a state with valve 14 closed (fig. 4). A number of windows are provided at spaced locations along the periphery of the connector, so that the closed state of valve 14, as the case may be, can be clearly ascertained irrespective of the position in which the connector is installed.

The above description clearly shows the increased reliability of the leak prevention device described, which may of, course undergo numerous modifications within the purview of the invention.

Merely by way of example, a safety feature analogous to plunger 26 and ring 24 may also be provided for threaded coupling sleeve 10 for preventing it from inadvertently working loose.

## Claims

1. A leak prevention device for water supply conduits of electric household appliances, comprising a supply conduit having a first end provided with a first connector having rotatably mounted thereon a first threaded coupling sleeve adapted to be screwed onto a water supply tap, and a second end provided with a connector having rotatably mounted thereon another threaded coupling sleeve adapted to be screw-connected to said electric household appliance, characterized in that at least one of said threaded coupling sleeves (9, 10) is provided with a toothed surface (25) normally engaged with a complementary toothed surface of a spring-loaded plunger (26) mounted on the outside of the respective connector (11), said surfaces being substantially shaped in a saw-tooth configuration so as to permit rotation of said coupling sleeve (9) only in its tightening direction when said plunger (26) is not depressed.

2. A leak prevention device according to claim 1, in which said supply conduit is substantially surrounded by a sheath so as to define therewith a substantially enclosed space, characterized in that the opposite ends of said sheath (8) are sealingly connected to said first and second connectors (11, 13) with the interposition therebetween of respective hulls (28, 29) formed of a more resilient material on the outer surfaces of said ends.

3. A leak prevention device according to claim 1, in which said first and second connectors comprise respective rigid tubular portions having respective ends of said supply conduit mounted thereon, characterized in that said supply conduit (7) is sleeved onto at least one of said tubular portions (12, 13) with the interposition of at least one O-ring (31, 32).

4. A leak prevention device according to claim 1, in which said supply conduit is substantially surrounded by a sheath so as to define therewith a substantially enclosed space communicating with the exterior through at least one compensation port, a compressed dry sponge body communicating with said enclosed space being adapted to expand to thereby displace a normaly open valve to a position obturating said supply conduit in the case of rupture thereof, characterized in that there is further provided a mass (34) of a hygroscopic material communicating with said enclosed space and disposed at a location relatively remote from said sponge body (21) and close to said compensation port (33).

5. A leak prevention device according to claim 1, in which said supply conduit is substantially surrounded by a sheath so as to define therewith a substantially enclosed space communicating with the exterior through at least one compensation port, a compressed dry sponge body communicating with said enclosed space being adapted to expand to thereby displace a normally open valve to a position obturating said supply conduit in the case of rupture thereof, characterized in that there is further provided non-return valve means (38) acting to permit the passage of air at elevated pressure through said compensation port (37) only from said enclosed space to the exterior.

6. A leak prevention device according to claim 5, characterized in that said non-return valve means comprises a plug (38) normally biased by a spring (27) acting on said plunger (26), into a position obturating said compensation port (37), the latter being adapted when said plug (38) is opened by air at elevated pressure, to establish communication between said enclosed space and the exterior through the gap between said plunger (26) and its mounting guide.

7. A leak prevention device according to claim 4 or 5, characterized in that said normally open valve (14) is subjected to the action of at least one spring (23) biasing it towards its closed position.

8. A leak prevention device according to claim 4 or 5, in which said sponge body is connected to a component mounted within said first connector for displacement between positions corresponding to the compressed state and the expanded state of said sponge body, respectively, characterized in that said component (18) is provided with a plurality of indicator zones (36) visible from outside of said first connector (11) through transparent windows (35) peripherally spaced about said first connector when said sponge body (21) is in a determined one of its states.
